# EUROPEAN PATENT APPLICATION

(11) **EP 3 095 567 A1**
(43) Date of publication of application: **23.11.2016**
(21) Application number: 15737402.6
(22) Date of filing: 15.01.2015
(51) Int. Cl.: B26F 1/20, B26F 1/42, B26D 1/36

(54) **SUPER ABSORBENT RESIN CUTTING DEVICE AND SUPER ABSORBENT RESIN MANUFACTURING METHOD USING SAME**

(30) Priority: 15.01.2014 KR 20140005187; 14.01.2015 KR 20150006800
(71) Applicant: Hanwha Chemical Corporation, Seoul 100-797 (KR)
(72) Inventor: SIM, Yu Jin, Daejeon 305-720 (KR); KIM, Eui Duk, Daejeon 305-720 (KR); KIM, Ji Yeon, Dalseong-gun Daegu 711-765 (KR); PAIK, Choong Hoon, Daejeon 305-720 (KR); OH, Seok Heon, Daejeon 305-720 (KR); LEE, Min Ho, Pohang-si Gyeongsangbuk-do 791-786 (KR); CHOI, Dae Keon, Jeonju-si Jeollabuk-do 560-792 (KR)
(74) Representative: Glawe, Delfs, Moll
(86) International application number: PCT/KR2015/000428
(87) International publication number: WO 2015/108350

(57) **Abstract**

The present invention relates to a super absorbent resin cutting device and a super absorbent resin manufacturing method using the same. The super absorbent resin cutting device according to the present invention comprises: an introduction unit for introducing a super absorbent resin; a cutter for cutting the super absorbent resin into pieces; and a discharge unit for discharging the super absorbent resin that has been cut.

## Description

### [Technical Field]

The present invention relates to a super absorbent resin cutting device and a super absorbent resin manufacturing method using the same.

### [Background Art]

A super absorbent polymer (SAP) is a synthetic polymer material capable of absorbing approximately 500 to 1000 times its weight of water. The super absorbent polymer has been differently called a super absorbency material (SAM), an absorbent gel material (AGM), etc. by different development enterprises. The super absorbent polymer disclosed above started to be commercialized for sanitary items, and is now being used widely as a water combination soil for horticulture, a water-stop material for civil engineering and construction, a nursery sheet, a freshness preservative in the food distribution field, a poultice material, and the like in addition to the sanitary fittings like a paper diaper for a child.

An inverse suspension polymerization method or an aqueous polymerization method is known as a method of preparing the super absorbent polymer. For example, inverse suspension polymerization is disclosed in Japanese Patent Publication Nos. sho 56-161408, sho 57-158209, and sho 57-198714. As the aqueous polymerization method, a thermal polymerization method of polymerizing an aqueous solution by applying heat to the aqueous solution and a photopolymerization method of polymerizing an aqueous solution by irradiating ultraviolet (UV) light to the aqueous solution are known.

Generally, a super absorbent polymer product is obtained from the processes of cutting and grinding after polymerization and then drying, crushing, and surface treatment classification. If an extruder or a needer is used in the grinding process, a material to be ground may adhere to a rotating screw. Therefore, the material may be ground non-uniformly, thus reducing efficiency in the drying process.

In addition, if particles of the dried material are in the form of lumps, an additional grinding process is needed for the lumps. This causes generation of fine powder, which, in turn, degrades quality and causes a product loss.

To solve the above problems, it is required to cut the material before the grinding process and then put the cut material into a grinder.

### [Disclosure]

### [Technical Problem]

Aspects of the present invention provide a super absorbent resin cutting device to obtain uniformly ground pieces of a super absorbent resin and a super absorbent resin manufacturing method using the same.

However, aspects of the present invention are not restricted to the one set forth herein. The above and other aspects of the present invention will become more apparent to one of ordinary skill in the art to which the present invention pertains by referencing the detailed description of the present invention given below.

### [Technical Solution]

According to an exemplary embodiment of the invention to solve the technical problem, a super absorbent resin cutting device comprising: an introduction unit for introducing a super absorbent resin; a cutter for cutting the super absorbent resin into pieces; and a discharge unit for discharging the super absorbent resin that has been cut.

The super absorbent resin may be sheet-shaped.

The cutter may be a roller-type cutter.

The roller-type cutter may have a continuous pattern blade formed on a surface thereof.

The pattern blade may have one or more shapes selected from the group consisting of a polygonal shape and a circular shape.

The polygonal shape may be one or more shapes selected from the group consisting of a triangle, a quadrangle, a pentagon, and a hexagon.

The device may further comprise a groove which corresponds to the shape of the pattern blade of the cutter with the super absorbent resin interposed therebetween.

According to another exemplary embodiment of the invention to solve the technical problem, a super absorbent resin manufacturing method comprising: polymerizing a super absorbent resin; introducing the super absorbent resin to the introduction unit of the device; cutting the super absorbent resin using the cutter; and discharging the cut super absorbent resin.

The method may further comprise: drying the resin discharged through the discharge unit of the device; and grinding the dried resin.

Specific details of other embodiments are included in the detailed description and drawings.

### [Advantageous Effects]

Embodiments of the present invention provide at least one of the following advantages.

A cutting device of the present invention can provide a superior super absorbent resin by reducing the load of a grinding process and the damage to a cross-linked polymerization ring due to overgrinding.

However, the effects of the present invention are not restricted to the one set forth herein. The above and other effects of the present invention will become more apparent to one of daily skill in the art to which the present invention pertains by referencing the claims.

### [Description of Drawings]

FIG. 1 is a schematic perspective view of a super absorbent resin cutting device according to an exemplary embodiment of the present invention;
FIG. 2 is an axial side view of a cutter according to an embodiment of the present invention;
FIG. 3 is a vertical side view of an axis of the cutter according to the embodiment of the present invention;
FIG. 4 is a vertical side view of an axis of a cutter according to another exemplary embodiment of the present invention; and
FIG. 5 is a schematic perspective view of a groove corresponding to a pattern blade according to an exemplary embodiment of the present invention.

### [Best Mode]

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification. In the drawings, sizes and relative sizes of layers and regions may be exaggerated for clarity.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present.

Spatially relative terms, such as "below", "beneath", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

It will be understood that, although the terms first, second, etc., may be used herein to describe various elements, these elements should not be limited by these terms. These terms are only used to distinguish one element from another element. Thus, a first element discussed below could be termed a second element without departing from the teachings of the present invention.

### Super absorbent resin cutting device

Hereinafter, embodiments of the present invention will be described with reference to the attached drawings.

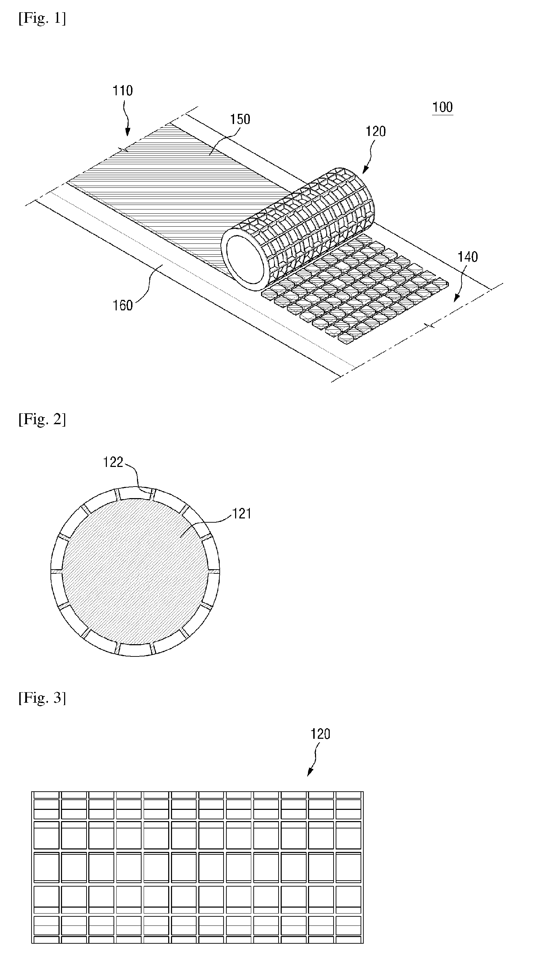

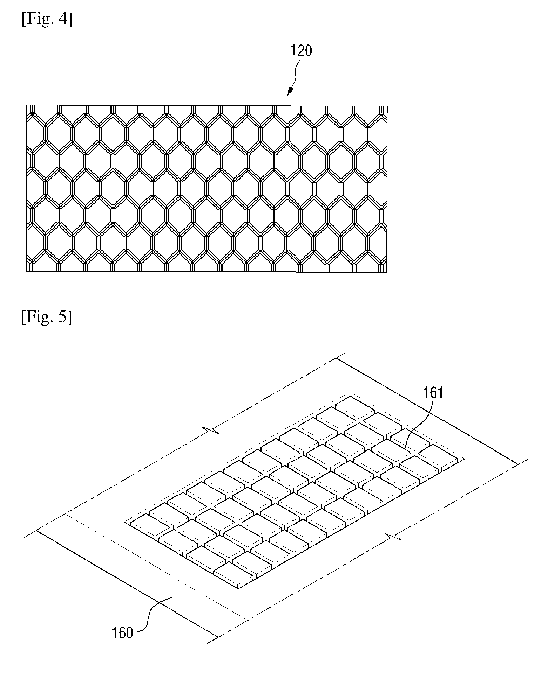

FIG. 1 is a schematic perspective view of a super absorbent resin cutting device according to an exemplary embodiment of the present invention. FIG. 2 is an axial side view of a cutter according to an embodiment of the present invention. FIG. 3 is a vertical side view of an axis of the cutter according to the embodiment of the present invention. FIG. 4 is a vertical side view of an axis of a cutter according to another exemplary embodiment of the present invention. FIG. 5 is a schematic perspective view of a groove corresponding to a pattern blade according to an exemplary embodiment of the present invention.

Referring to these drawings, the super absorbent resin cutting device 100 includes an introduction unit 110 to which a super absorbent resin 150 to be transferred on a support 160 is fed, the cutter 120 which cuts the super absorbent resin 150 fed to the introduction unit 110, and a discharge unit 140 through which the cut super absorbent resin 150 is discharged.

The support 160 is not particularly limited but may consist of one conveyor belt or a combination of two or more conveyor belts in order to transfer the super absorbent resin 150. When the support 160 consists of a combination of two or more conveyor belts, a connecting portion of the conveyor belts may correspond to the cutter 120.

The cutter 120 may be, for example, a roller-type cutter. In a specific example, the cutter 120 may have the continuous pattern blade 122 on a surface thereof. As a rotor 121 of the roller-type cutter rotates, the super absorbent resin 150 may be cut in the shape of the pattern blade 122.

The pattern blade 122 can protrude from the rotor 121 to any height as long as it is higher than the super absorbent resin 150 that is fed. The height of the fed super absorbent resin 150 is not limited to a particular height and can vary according to process conditions.

In an exemplary embodiment, an end of the pattern blade 122 may be saw-toothed. In this case, the saw teeth may lie in the same plane with the pattern blade 122. However, the saw teeth can also lie off the above plane. When the saw teeth lie off the plane of the pattern blade 122, two adjacent saw teeth may be disposed in different directions.

The pattern blade 122 may have one or more shapes selected from the group consisting of a polygonal shape and a circular shape. The polygonal shape may be one or more shapes selected from the group consisting of a triangle, a quadrangle, a pentagon, and a hexagon.

In an exemplary embodiment, the pattern blade 122 may consist of the same shape repeated continuously or a combination of different shapes.

A pattern defined by the pattern blade 122 can have various sizes according to process needs. For example, an average diameter of the pattern may be set to, but is not limited to, a range of 5 to 100 mm. If the average diameter of the pattern is less than 5 mm, a gap between individual shapes of the pattern blade 122 is too small. Accordingly, the super absorbent resin 150 may be pushed by pattern blade 122 and cannot pass smoothly through the pattern blade 122 and may thus be incompletely cut in the cutting process. On the other hand, if the average diameter of the pattern is more than 100 mm, it is difficult to obtain a desired effect from the cutting process.

In an exemplary embodiment, the support 160 may not include a driver. In this case, the super absorbent resin 150 may be transferred by a turning force of the cutter 120.

The groove 161 may be formed at a location corresponding to the pattern blade 122 such that the pattern blade 122 can be partially inserted into the groove 161 with the super absorbent resin 150 interposed therebetween. In this case, defects caused by incomplete cutting of the super absorbent resin 150 can be prevented, and a more definite cutting effect can be obtained.

The discharge unit 140 may be an extension of the support 160 as shown in FIG. 1. However, the present invention is not limited thereto. That is, no extension of the support 160 may be provided, and the cut super absorbent resin 150 may fall immediately from the support 160.

In an example of driving the super absorbent resin cutting device, referring to FIGS. 1 and 2, the polymerized super absorbent resin 150 may be fed onto the introduction unit 110 of the support 160 composed of one or more conveyor belts. The super absorbent resin 150 may be placed on the support 160 and transferred from the introduction unit 110 toward the discharge unit 140. Here, the support 160 may be moved in a direction from the introduction unit 110 toward the discharge unit 140 by a driver or, if no driver is available, by the turning force of the cutter 120 located on the support 160 as described above.

As for the introduction unit 110 and the discharge unit 140, referring to FIG. 1, the introduction unit 110 is located in an upper left portion of the support 160 based on the cutter 120, and the discharge unit 140 is located in an upper right portion of the support 160 based on the cutter 120.

As the super absorbent resin 150 placed on the support 160 passes through the cutter 120 located on the support 160, it is cut into a desired size and shape by the pattern blade 122 of the cutter 120. The size and shape into which the super absorbent resin 150 is cut may be determined by the pattern shape and size of the pattern blade 122 of the cutter 120. That is, the cutter 120 may be a roller-type cutter having the continuous pattern blade 122 formed on the surface thereof. As the rotor 121 of the roller-type cutter rotates, the super absorbent resin 150 may be cut in the shape of the pattern blade 122.

The cut super absorbent resin 150 may be transferred on the support 160 and then discharged through the discharge unit 140 formed as an extension of the support 160. However, the present invention is not limited thereto. That is, no extension of the support 160 may be provided, and the cut super absorbent resin 150 may fall immediately from the support 160.

### Super absorbent resin manufacturing method

A super absorbent resin manufacturing method according to an embodiment of the present invention will now be described with reference to FIGS. 1 through 5.

The super absorbent resin manufacturing method includes polymerizing a super absorbent resin, introducing the polymerized super absorbent resin 150 to the introduction unit 110 of the above-described super absorbent resin cutting device 100, cutting the super absorbent resin 150, and discharging the cut super absorbent resin 150.

The polymerizing of the super absorbent resin is not particularly limited. However, a monomer composition may be injected into a polymerizer and then polymerized. In this case, the monomer composition may be injected and polymerized on a belt in order to form a super absorbent resin, but the present invention is not limited thereto.

Any monomer usually used to prepare a super absorbent resin may be used as a water-soluble ethylene-based unsaturated monomer contained in the monomer composition. The monomer may be at least one selected from the group consisting of an anionic monomer and a salt thereof, a nonionic hydrophilic monomer, and an amino group-containing unsaturated monomer and a quaternary compound thereof.

In an exemplary embodiment, the monomer may be at least one anionic monomer, which is selected from the group consisting of acrylic acid, methacrylic acid, maleic anhydride, fumaric acid, crotonic acid, itaconic acid, 2-acryloylethane sulfonic acid, 2-methacryloylethane sulfonic acid, 2- (meth)acrylo-ylpropane sulfonic acid and 2-(meth)acrylamide-2-methyl propane sulfonic acid, or a salt thereof; at least one nonionic hydrophilic monomer which is selected from the group consisting of (meth)acrylamide, N-substituted (meth)acrylate, 2-hydroxyethyl(meth)acrylate, 2- hydroxypropyl(meth)acrylate, methoxy polyethylene glycol (meth)acrylate and polyethylene glycol (meth)acrylate; or at least one amino group-containing unsaturated monomer, which is selected from the group consisting of (N,N)-dimethylaminoethyl(meth)acrylate and (N,N)- dimethylaminopropyl(meth)acrylamide, or a quaternary compound thereof.

The concentration of the water-soluble ethylene-based unsaturated monomer in the monomer composition may be determined in view of polymerization time and reaction conditions (such as the feeding speed of the monomer composition, the irradiation time, range and intensity of heat and or light, and the width, length and movement speed of the belt). In an exemplary embodiment, the concentration of the water-soluble ethylene-based unsaturated monomer may be in a range of 40 to 60% by weight. In this case, it may be efficient in terms of monomer solubility and economic feasibility.

The monomer composition may further include at least one additive selected from the group consisting of a photopolymerization initiator, a thermal polymerization initiator, and a crosslinking agent. The type of the polymerization initiator may be determined based on whether thermal polymerization, photopolymerization, or both thermal polymerization and photopolymerization will be used.

The photopolymerization initiator is not particularly limited but may be a single material or a mixture of two or more materials selected from the group consisting of, but is not limited to, an acetophenone derivative such as diethoxy acetophenone, 2-hydroxy-2-methyl-1-phenylpropane-1-on, 4-(2-hydroxyethoxy)phenyl-(2-hydroxy)-2-propyl ketone or 1-hydroxycyclohexyl phenyl ketone; a benzoin alkyl ether compound such as benzoin methyl ether, benzoin ethyl ether, benzoin isopropyl ether or benzoin isobutyl ether; a benzophenone derivative such as o-benzoyl methyl benzoate, 4-phenyl benzophenone, 4-benzoyl-4'-methyl-diphenyl sulfide or (4-benzoyl benzyl)trimethyl ammonium chloride; a thioxanthone compound; an acyl phosphine oxide derivative such as bis(2,4,6-trimethylbenzoyl)-phenyl phosphine oxide or diphenyl(2,4,6-trimethylbenzoyl)-phosphine oxide; and an azo compound such as 2-hydroxy methyl propionitrile or 2,2'-(azobis(2-methyl-N-(1,1-bis(hydroxymethyl)-2-hydroxyethyl)propionamide).

The thermal polymerization initiator is not particularly limited but may be a single initiator or a mixture of two or more initiators selected from the group consisting of, but not limited to, an azo-based initiator, a peroxide-based initiator, a redox-based initiator, and an organic halide. The thermal polymerization initiator may also be, but is not limited to, sodium persulfate (Na₂S₂0₈) or potassium persulfate (K₂S₂0₈). Each of the photopolymerization initiator and the thermal polymerization initiator can be added in the monomer composition in any amount as long as it can bring about a polymerization initiating effect. In an exemplary embodiment, the photopolymerization initiator may be added in an amount of, but not limited to, 0.005 to 0.1 parts by weight based on 100 parts by weight of monomer, and the thermal polymerization initiator may be added in an amount of, but not limited to, 0.01 to 0.5 parts by weight based on 100 parts by weight of monomer.

The crosslinking agent may be a crosslinking agent containing at least one functional group that can react with a substituent of a monomer and at least one ethylene unsaturated group or a crosslinking agent containing two or more functional groups that can react with a substituent of a monomer and/or a substituent formed by hydrolyzing the monomer.

In an exemplary embodiment, the crosslinking agent may be bisacrylamide having a carbon number of 8 to 12, bismethacrylamide having a carbon number of 8 to 12, poly(meth)acrylate of polyol having a carbon number of 2 to 10, or poly(meth)allyl ether of polyol having a carbon number of 2 to 10. More specifically, the crosslinking agent may be a single material or a mixture of two or more materials selected from the group consisting of, but not limited to, N,N'-methylenebis (meth)acrylate, ethylene oxy(meth)acrylate, polyethylene oxy(meth)acrylate, propylene oxy (meth)acrylate, glycerin diacrylate, glycerin triacrylate, trimethylol triacrylate, triallylamine, triallyl cyanurate, triallyl isocyanate, polyethylene glycol, diethylene glycol, and propylene glycol.

The crosslinking agent can be added in the monomer composition in any amount as long as it can bring about a crosslinking effect. In an exemplary embodiment, the crosslinking agent may be added in an amount of, but not limited to, 0.01 to 0.5 parts by weight based on 100 parts by weight of monomer.
The polymerized super absorbent resin 150 may be fed to the introduction unit 110 of the cutting device 100 and then cut by the cutter 120.

In this case, the cutter 120 may cut the super absorbent resin 150 into patterned pieces.

The cut super absorbent resin 150 may be discharged through the discharge unit 140. The discharged super absorbent resin 150 may be ground and dried, and then the dried resin may be ground again. In some cases, a pre-drying process may be performed before the grinding process in order to prevent clumping in the grinding process.

A grinding method used here is not limited to a particular method. For example, a device for cutting and extruding a rubber elastomer may be used. In an exemplary embodiment, the grinding method may be, but is not limited to, a typical cutter, a chopper-type cutter, a kneader-type cutter, a vibration grinder, an impact grinder, or a friction grinder.

As a drying method, a conventional dryer and a heating furnace may be used. In an exemplary embodiment, the drying method may be, but is not limited to, a hot-air dryer, a fluidized bed dryer, a flash dryer, a UV dryer, or a dielectric-heat dryer. A drying temperature is not particularly limited but may be in a range of 100 to 200 °C in order for prevention of thermal degradation and efficient drying.

While the present invention has been particularly shown and described with reference to exemplary embodiments thereof, it will be understood by those of ordinary skill in the art that various changes in form and detail may be made therein without departing from the spirit and scope of the present invention as defined by the following claims. The exemplary embodiments should be considered in a descriptive sense only and not for purposes of limitation.

## Claims

1. A super absorbent resin cutting device comprising:
an introduction unit for introducing a super absorbent resin;
a cutter for cutting the super absorbent resin into pieces; and
a discharge unit for discharging the super absorbent resin that has been cut.

2. The device of claim 1, wherein the super absorbent resin is sheet-shaped.

3. The device of claim 1, wherein the cutter is a roller-type cutter.

4. The device of claim 3, wherein the roller-type cutter has a continuous pattern blade formed on a surface thereof.

5. The device of claim 4, wherein the pattern blade has one or more shapes selected from the group consisting of a polygonal shape and a circular shape.

6. The device of claim 5, wherein the polygonal shape is one or more shapes selected from the group consisting of a triangle, a quadrangle, a pentagon, and a hexagon.

7. The device of claim 4, further comprising a groove which corresponds to the shape of the pattern blade of the cutter with the super absorbent resin interposed therebetween.

8. A super absorbent resin manufacturing method comprising:
polymerizing a super absorbent resin;
introducing the super absorbent resin to the introduction unit of the device of any one of claims 1 through 7;
cutting the super absorbent resin using the cutter; and
discharging the cut super absorbent resin.

9. The method of claim 8, further comprising:
drying the resin discharged through the discharge unit of the device; and
grinding the dried resin.
